# FASCICULE DE BREVET EUROPEEN

(11) **EP 4 297 962 B1**
(45) Date de publication et mention de la délivrance du brevet: **18.12.2024**
(21) Numéro de dépôt: 22708986.9
(22) Date de dépôt: 14.02.2022
(51) Int. Cl.: B29D 30/06, B60C 23/20, B60C 19/00, B29D 30/00

(54) **METHODE D'INSTRUMENTATION D'UN PNEUMATIQUE POUR LA MESURE DE LA TEMPERATURE INTERNE EN ROULAGE**
REIFENINSTRUMENTATIONSVERFAHREN ZUR MESSUNG DER INNENTEMPERATUR WÄHREND DES ROLLENS
TIRE INSTRUMENTATION METHOD FOR MEASURING THE INTERNAL TEMPERATURE DURING ROLLING

(30) Priorité: 25.02.2021 FR 2101822
(43) Date de publication de la demande: 03.01.2024
(73) Titulaire: COMPAGNIE GENERALE DES ETABLISSEMENTS MICHELIN, 63000 Clermont-Ferrand (FR)
(72) Inventeur: BLONDELET, Michel, 63040 Clermont-Ferrand Cedex 9 (FR); BESNARD, Nicolas, 63040 Clermont-Ferrand Cedex 9 (FR); RICHEZ, Sylvie, 63040 Clermont-Ferrand Cedex 9 (FR)
(74) Mandataire: M.F.P. Michelin
(86) Numéro de dépôt international: PCT/FR2022/050259
(87) Numéro de publication internationale: WO 2022/180320

(56) Documents cités:
- EP-A1- 2 927 074
- EP-A1- 2 988 109
- EP-B1- 3 578 392
- DE-A1- 102019 206 265
- US-A- 5 731 754
- US-A1- 2005 057 346
- US-A1- 2017 282 657

## Description

### Domaine technique

La présente invention concerne une méthode d'instrumentation d'un pneumatique pour la mesure de la température à l'intérieur d'un mélange de caoutchouc dudit pneumatique en de roulage. Les pneumatiques principalement concernés équipent les véhicules du génie civil d'exploitation des mines.

Par exemple, de tels véhicules (Dumper ou Tombereau) sont utilisés dans des mines à ciel ouvert pour transporter des matériaux extraits de carrières avec des chargements qui peuvent atteindre une masse de plus de 350 tonnes. Les pneumatiques sont dimensionnés en conséquence, et peuvent peser chacun aux environs de 5 tonnes.

A titre d'illustration, un pneumatique concerné par l'invention a une désignation normalisée suivant l'ETRTO (Organisation Technique Européenne pour les Pneus et les Jantes) du type 59/80 R 63, avec une pression de gonflage à 650 kPa. Le diamètre extérieur du pneumatique monté sur une jante et gonflé à 650kPa peut mesurer plus de 4 mètres. On retrouve aussi d'autres dimensions de 49 à 57 pouces de diamètre sur ces véhicules.

### Définitions

Par convention, un repère (O, t, y, r), dont le centre O coïncide avec le centre du pneumatique, les directions circonférentielles (O, t), axiale (O, y), et radiale (O, r) désignent respectivement une direction tangente à la surface de roulement du pneumatique selon le sens de rotation, une direction parallèle à l'axe de rotation du pneumatique, et une direction orthogonale à l'axe de rotation du pneumatique.

Par radialement intérieur, respectivement radialement extérieur, on entend plus proche, respectivement plus éloigné de l'axe de rotation du pneumatique.

Par axialement intérieur, respectivement axialement extérieur, on entend plus proche, respectivement plus éloigné du plan équatorial du pneumatique, le plan équatorial du pneumatique étant le plan passant par le milieu de la bande de roulement du pneumatique et perpendiculaire à l'axe de rotation du pneumatique.

Par mélange élastomérique, ou mélange de caoutchouc on entend un matériau élastomérique obtenu par mélangeage de ses divers constituants. Un mélange élastomérique comprend classiquement une matrice élastomérique avec au moins un élastomère diénique de type caoutchouc naturel ou synthétique, au moins une charge renforçante de type noir de carbone et/ou de type silice, un système de réticulation le plus souvent à base de soufre, et des agents de protection.

Un mélange élastomérique peut être caractérisé mécaniquement, en particulier après cuisson, par ses propriétés dynamiques, telles qu'un module de cisaillement dynamique G*= (G'²+G"²)^{1/2}, où G' est le module de cisaillement élastique et G" le module de cisaillement visqueux, et une perte dynamique tgδ=G"/G'. Le module de cisaillement dynamique G* et la perte dynamique tgô sont mesurés sur un viscoanalyseur de type Metravib VA4000, selon la norme ASTM D 5992-96. On enregistre la réponse d'un échantillon de mélange élastomérique vulcanisé, ayant la forme d'une éprouvette cylindrique de 4 mm d'épaisseur et de 400 mm² de section, soumis à une sollicitation sinusoïdale en cisaillement simple alterné, à la fréquence de 10Hz, avec un balayage en amplitude de déformation de 0,1% à 50% (cycle aller), puis de 50% à 0,1% (cycle retour), et à une température donnée, par exemple égale à 60 °C. Ces propriétés dynamiques sont ainsi mesurées pour une fréquence égale à 10 Hz, une déformation égale à 50% de l'amplitude de déformation crête-crête et une température pouvant être égale à 60°C ou 100°C.

Un mélange élastomérique peut également être caractérisé par des propriétés mécaniques statiques. Les essais de traction permettent de déterminer les contraintes d'élasticité et les propriétés à la rupture. Sauf indication différente, ils sont effectués conformément à la norme française N F T 46-002 de septembre 1988. On mesure en seconde élongation (i.e. après un cycle d'accommodation) les modules sécants dits "nominaux" (ou contraintes apparentes, en MPa) à 10% d'allongement (noté "MA10") et 100% d'allongement ("MA100"). Toutes ces mesures de traction sont effectuées dans les conditions normales de température (23±2°C) et d'hygrométrie (50±5% d'humidité relative), selon la norme française NF T 40-101 (décembre 1979). On mesure également les contraintes à la rupture (en MPa) et les allongements à la rupture (en %), à une température de 23°C.

### Technique antérieure

De façon générale un pneumatique comprend une bande de roulement, destinée à venir en contact avec un sol par l'intermédiaire d'une surface de roulement, dont les deux extrémités axiales sont reliées par l'intermédiaire de deux flancs à deux bourrelets assurant la liaison mécanique entre le pneumatique et la jante sur laquelle il est destiné à être monté.

Un pneumatique radial comprend en outre une armature de renforcement, constituée d'une armature de sommet, radialement intérieure à la bande de roulement, et d'une armature de carcasse, radialement intérieure à l'armature de sommet.

L'armature de carcasse d'un pneumatique radial pour véhicule lourd de type génie civil comprend habituellement au moins une couche de carcasse comprenant des renforts généralement métalliques, enrobés par un mélange de caoutchouc, obtenu par mélangeage et appelé mélange d'enrobage. Une couche de carcasse comprend une partie principale, reliant les deux bourrelets entre eux et s'enroulant généralement, dans chaque bourrelet, de l'intérieur vers l'extérieur du pneumatique autour d'un élément de renforcement circonférentiel le plus souvent métallique appelé tringle, pour former un retournement. Les renforts métalliques d'une couche de carcasse sont sensiblement parallèles entre eux et forment, avec la direction circonférentielle, un angle compris entre 85° et 95°.

L'armature de sommet d'un pneumatique radial pour véhicule lourd de type génie civil comprend une superposition de couches de sommet s'étendant circonférentiellement, radialement à l'extérieur de l'armature de carcasse. Chaque couche de sommet est constituée de renforts généralement métalliques, parallèles entre eux et enrobés par un mélange de caoutchouc appelé mélange d'enrobage.

Parmi les couches de sommet, on distingue usuellement les couches de protection, constitutives de l'armature de protection et radialement les plus à l'extérieur, et les couches de travail, constitutives de l'armature de travail et radialement comprises entre l'armature de protection et l'armature de carcasse.

L'armature de protection, comprenant au moins une couche de protection, protège essentiellement les couches de travail des agressions mécaniques ou physico-chimiques, susceptibles de se propager à travers la bande de roulement radialement vers l'intérieur du pneumatique.

L'armature de protection des pneumatiques de type GC tels ceux décrits précédemment comprend usuellement deux couches de protection, radialement superposées, formées de renforts métalliques élastiques, parallèles entre eux dans chaque couche et croisés d'une couche à la suivante, en formant, avec la direction circonférentielle, des angles au moins égaux à 10° et au plus égaux à 35°.

L'armature de travail, comprenant au moins deux couches de travail, a pour fonction de ceinturer le pneumatique et de lui conférer de la rigidité et de la tenue de route. Elle reprend à la fois des sollicitations mécaniques de gonflage, générées par la pression de gonflage du pneumatique et transmises par l'armature de carcasse, et des sollicitations mécaniques de roulage, générées par le roulage du pneumatique sur un sol et transmises par la bande roulement. Elle doit en outre résister à l'oxydation et aux chocs et perforations, grâce notamment à sa conception intrinsèque et à celle de l'armature de protection.

L'armature de travail comprend usuellement deux couches de travail, radialement superposées, formées de renforts métalliques non extensibles, parallèles entre eux dans chaque couche et croisés d'une couche à la suivante, en formant, avec la direction circonférentielle, des angles au plus égaux à 60°, et, de préférence, au moins égaux à 15° et au plus égaux à 45°. On entend ici par renforts métalliques non extensibles, un renfort métallique caractérisé par un allongement, sous une force de traction égale à 10% de la force à rupture au plus égal à 0.2 %.

Pour diminuer les sollicitations mécaniques de gonflage transmises à l'armature de travail, il est connu de disposer, radialement à l'extérieur de l'armature de carcasse, une armature de frettage. L'armature de frettage, dont la fonction est de reprendre au moins en partie les sollicitations mécaniques de gonflage, améliore l'endurance de l'armature de sommet par une rigidification de l'armature de sommet. L'armature de frettage peut être positionnée radialement à l'intérieur de l'armature de travail, entre les deux couches de travail de l'armature de travail, ou radialement à l'extérieur de l'armature de travail.

L'armature de frettage comprend usuellement deux couches de frettage, radialement superposées, formées de renforts métalliques, parallèles entre eux dans chaque couche et croisés d'une couche à la suivante, en formant, avec la direction circonférentielle, des angles au plus égaux à 10°.

L'exploitation minière consiste à extraire des minerais, c'est-à-dire des roches de la croûte terrestre contenant des minéraux ou des métaux utiles, en proportion suffisamment intéressante pour justifier leur exploitation.

L'étape de transport dans une exploitation minière est essentielle pour sa rentabilité économique. Les véhicules (Dumper ou tombereau) sont généralement actifs sans arrêt de manière à obtenir une productivité maximale en déplaçant le plus gros volume de gravats pour être traités par des procédés de minéralurgie.

La gestion des pneumatiques de la flotte des véhicules consiste à surveiller la pression de gonflage, la température, et l'usure dans une approche de maintenance prédictive de manière à anticiper les dysfonctionnements liés aux pneumatiques, et donc à éviter l'arrêt du véhicule pour maximiser sa durée d'usage.

Ainsi une des attentes du client exploiteur des mines est la productivité de l'exploitation qui ne doit pas être affectée par des défaillances du produit, et donc la durée d'utilisation des pneumatiques qui doit être la plus longue possible. Il faut éviter les immobilisations des véhicules et par conséquent, il faut développer la maintenance préventive pour une utilisation maîtrisée des pneumatiques.

Le suivi de la température des pneumatiques en temps réel est une étape essentielle de la gestion de la flotte de véhicules. La température est en lien direct avec l'endurance, et la durée de vie des pneumatiques.

Dans le document FR3060463, un procédé d'estimation de la sévérité des conditions d'utilisation d'un pneumatique monté sur véhicule est proposé. Une étape de ce procédé évalue la température à l'intérieur d'un mélange, mais cette évaluation est basée sur un modèle mathématique qui peut être complexe à mettre en oeuvre dans certains cas.

On connaît de la demande WO 2008046766A1 un procédé d'indication du vieillissement subi par un pneumatique, dans lequel on mesure une température localement au moins en un point du pneumatique. Ce procédé nécessite l'installation d'un capteur de température directement dans le pneumatique, ce qui peut engendrer des coûts supplémentaires.

Pour obtenir les mesures de température à l'intérieur des mélanges de caoutchouc d'un pneumatique, il existe des méthodes classiques utilisant par exemple des thermocouples, mais ces approches nécessitent beaucoup d'interventions pour installer les thermocouples et procéder à la mesure. En outre, ces méthodes classiques supposent l'arrêt du véhicule pour procéder aux mesures de la température et génèrent donc une baisse de productivité de l'exploitation de la mine pour des mesures ponctuelles de la température.

Dans le cadre d'une exploitation minière où la rentabilité est directement liée au temps de roulage des véhicules, les approches décrites précédemment ne sont pas adaptées.

Il existe encore un besoin d'accéder aux températures à l'intérieur des mélanges de caoutchouc d'un pneumatique en roulage, d'une manière simple, non destructrice et automatique, sans arrêter le véhicule dont les pneumatiques sont mesurés. Il faut pouvoir localiser les zones du pneumatique les plus sensibles thermiquement pour mesurer la température en temps réel. Pour cela, les conditions de roulage telles que la nature des sols selon qu'ils soient caillouteux, boueux, ou asphaltés, la structure interne du pneumatique, ou encore la topographie de la mine sont à prendre en considération.

### Exposé de l'invention

Pour accéder aux températures, les inventeurs se sont donnés l'objectif de trouver une méthode d'instrumentation du pneumatique qui intègre les conditions mentionnées ci-dessus.

La solution proposée est une méthode d'instrumentation d'un pneumatique du génie civil pour la mesure de la température à l'intérieur d'un mélange de caoutchouc dudit pneumatique comprenant les étapes suivantes :
a. Repérage sur la surface externe du pneumatique d'au moins une zone selon des critères de sélection prédéfinis, un capteur de mesure de la température étant destiné à être inséré dans ladite au moins une zone ;
b. Perçage d'une cavité dans ladite au moins une zone d'insertion repérée à l'étape précédente, d'une profondeur Hc dans la direction de perçage définie par une droite faisant un angle Alpha avec une direction radiale du pneumatique au point de perçage ;
c. Activation du capteur muni d'un microprocesseur, des moyens de transmission radio, d'une sonde de mesure de la température, et des moyens d'alimentation ;
d. Insertion du capteur dans la cavité percée dans le pneumatique en coopérant avec un dispositif d'évacuation de l'air contenu dans la cavité ;
e. Fixation du capteur au fond, et/ou sur les parois de la cavité à l'aide d'un dispositif de fixation ;
f. Fermeture hermétique de la cavité par des moyens d'obturation.

Un pneumatique du génie civil comprend une bande de roulement destinée à être en contact avec un sol. La nature du sol varie selon les conditions d'utilisation, tantôt, boueux, caillouteux, ou encore asphalté. Pour s'adapter aux différents types de sol, la bande de roulement comporte des découpures, notamment transversales, circonférentielles ou obliques de manière à définir des blocs de mélange de caoutchouc destinés à assurer une adhérence suffisante quelle que soit la nature du sol pour transmettre le couple du véhicule. Les blocs de mélange de caoutchouc de la bande de roulement comportent également des incisions pour former des lamelles d'assouplissement en vue de favoriser l'adhérence sur par exemple des sols enneigés.

La première étape de la méthode d'instrumentation du pneumatique consiste à examiner la surface extérieure du pneumatique pour repérer les zones d'insertion des capteurs. Cette étape s'appuie par exemple, sur l'expertise visuelle des hommes de l'art lors de l'examen de la surface extérieure du pneumatique pour détecter les zones d'insertion des capteurs.

Préférentiellement, un des critères prédéfinis de sélection de la zone de perçage pour l'insertion d'un capteur de mesure de la température consistent à se positionner dans la bande de roulement du pneumatique, destinée à être en contact avec un sol. Des critères complémentaires peuvent être définis en fonction des conditions de roulage telles que la nature des sols selon qu'ils soient caillouteux, boueux, ou asphaltés, la structure interne du pneumatique, ou encore la topographie de la mine d'exploitation.

Les blocs de mélange de caoutchouc de la bande de roulement sont périodiquement en contact avec le sol, et sont soumis à des fortes sollicitations pendant le roulage. Il s'ensuit que la température est le plus souvent très élevée dans ces zones de grandes déformations. Pour éviter toute auto-combustion de ces blocs de caoutchouc il est important de pouvoir en connaître la température lors des fortes sollicitations. L'insertion des capteurs dans ces blocs de caoutchouc permet un accès en temps réel à leurs niveaux de température.

L'invention prévoit également que des zones du pneumatique situées dans la partie basse du pneumatique au niveau du crochet de la jante peuvent également être instrumentées. Ce sont des zones d'intenses flexions dues à l'écrasement du pneumatique par la charge portée qui du fait des fortes déformations subies, sont aussi le siège de température élevée.

Après l'identification des zones d'insertion, l'étape de perçage se fait à l'aide d'une perceuse munie d'un foret orientable. La profondeur de perçage HC dépend de la structure interne du pneumatique comme par exemple le nombre et l'étagement des couches de sommet. Dans un souci de traçabilité, l'angle de perçage, Alpha, mesuré entre la direction de perçage et la direction radiale est relevé, car après la séance de tests on peut envisager le retrait des capteurs du pneumatique.

Avantageusement, le capteur étant de forme cylindrique, l'étape de perçage est réalisée à l'aide d'un foret d'un diamètre au plus égal au diamètre du capteur.

En effet, dans cette configuration, la pénétration du capteur dans la cavité se fait avec un serrage naturel quand le capteur et la cavité ont le même diamètre. Le maintien du capteur en une position fixe est facilité dans ces conditions.

Avant l'insertion du capteur, on procède à son activation en coupant le fil d'activation relié aux électrodes du capteur. La carte électronique est alors mise sous tension et les moyens de communication sont activés. On mesure la température, on la moyenne sur l'intervalle de temps entre deux émissions.

Suite au perçage, après un nettoyage précis des cavités en enlevant les résidus de caoutchouc résultant du perçage, chaque capteur est fixé au fonds, et/ou sur les parois de la cavité.

Selon l'invention, l'insertion du capteur dans la cavité percée dans le pneumatique coopère avec un dispositif d'évacuation de l'air contenu dans la cavité.

Lors de la pénétration d'un capteur dans une cavité, il se forme un volume d'air entre le fond de la cavité et une première face enfoncée du capteur en vis-à-vis. Ce volume d'air s'oppose à l'avancée du capteur dans la cavité. Un dispositif pour évacuer l'air doit être mise en oeuvre simultanément avec l'insertion du capteur.

Dans un mode de réalisation de l'invention, un dispositif d'évacuation de l'air de la cavité pendant l'insertion du capteur comprend un tube cylindrique creux aménagé dans le capteur, de sorte que la pénétration du capteur dans la cavité s'accompagne de l'expulsion de l'air par le tube creux grâce à la compression du volume d'air situé entre une première base du capteur en vis-à-vis du fond de la cavité.

Préférentiellement, la fixation du capteur au fond, et/ou sur les parois de la cavité est réalisée par collage.

Préférentiellement encore, le collage est réalisé avec une colle de vulcanisation à froid, et le temps de prise du collage est au moins de 24 heures.

On entend par colle de vulcanisation à froid une colle qui provoque une réaction chimique consistant à incorporer un agent vulcanisant, du soufre le plus souvent, à un élastomère brut pour former des ponts entre les chaînes moléculaires. Cette opération rend notamment le matériau moins plastique mais plus élastique.

Les inventeurs ont observé que l'utilisation d'une telle colle dans le contexte de l'invention permet d'avoir un collage de haute qualité entre le capteur et le mélange de caoutchouc de la cavité.

Un exemple préférentiel de colle adhésive est celle commercialisée par la société Tiptop sous la désignation colle "blue cement".

Le temps de prise de 24 heures garantit un niveau d'adhésion suffisant pour la fixation du capteur dans le mélange de caoutchouc. Le capteur ainsi collé au mélange de caoutchouc se trouve privé de tout mouvement lors du roulage du pneumatique.

Une fois que chaque capteur est bien fixé dans la cavité en étant en contact avec le fond et les parois, il demeure un volume résiduel vide dans la cavité, radialement à l'extérieur du capteur qu'il convient d'obturer afin de protéger le capteur. Pour protéger le capteur et pour assurer une bonne étanchéité, des moyens d'obturation viennent remplir le volume vide à l'aide d'un objet obturant.

Avantageusement, des moyens d'obturation de la cavité percée dans le pneumatique comprennent un bouchon fixé par collage sur les parois de la cavité.

Préférentiellement, desdits moyens d'obturation de la cavité percée dans le pneumatique coopèrent avec un dispositif d'évacuation de l'air contenu dans la cavité.

Un dispositif d'évacuation de l'air de la cavité similaire à celui décrit précédemment pour insérer le capteur dans la cavité peut être utilisé pour insérer cette fois-ci lesdits moyens d'obturation.

Avantageusement, lesdits moyens d'obturation de la cavité percée dans le pneumatique comprennent un bouchon constitué du même mélange de caoutchouc que celui formant les parois de la cavité.

L'utilisation du même mélange collé à l'aide d'une colle de vulcanisation à froid favorise l'adhésion des deux supports et conduit à une meilleure fixation.

Pour obtenir des résultats de mesure de la température sur tout le volume du pneumatique, avantageusement, des premiers capteurs sont positionnés selon une direction circonférentielle avec un premier pas de distribution, et/ou des seconds capteurs sont positionnés dans une direction axiale selon un deuxième pas de distribution.

Une campagne de mesure de la température peut durer de 10 à 15 jours. Un autre objet de l'invention est de pouvoir récupérer les capteurs après la séance d'essais. Pour cela l'invention propose également une méthode de récupération d'un capteur après roulage d'un pneumatique, ledit capteur ayant été inséré selon la méthode d'instrumentation dans un pneumatique du génie civil telle que décrite précédemment, ladite méthode de récupération d'un capteur comprenant les étapes suivantes :
i. Identification d'une zone d'insertion d'un capteur sur la surface externe du pneu ;
ii. Retrait des moyens d'obturation ;
iii. Suppression de la fixation du capteur du fond et/ou des parois de la cavité ;
iv. Retrait du capteur par un dispositif d'injection d'air comprimé;
v. Obturation de la cavité.

L'usure progressive de la bande de roulement pourrait entraîner l'éjection du capteur dans l'environnement. Pour éviter cette pollution, le capteur est récupéré et certaines de ses composantes non altérées sont réutilisées.

Avantageusement, l'étape de récupération du capteur après roulage du pneumatique comprend un dispositif une étape de dissolution de la colle de fixation.

Lorsque par exemple, les moyens d'obturation de la cavité sont un bouchon collé comme décrit précédemment, pour retirer le capteur, il faut d'abord enlever le bouchon collé dans la cavité. Un solvant de dissolution permet de rompre l'adhésion de la colle entre le bouchon et la cavité. L'utilisation d'un outil de la forme d'un tire-bouchon permet de retirer le bouchon. Pour retirer le capteur il faut également utiliser un solvant de dissolution pour rompre l'adhésion de la colle à la surface du capteur et de la cavité. On utilise ensuite un dispositif comprenant un tube creux qui traverse le capteur dans la direction de la plus grande longueur de la cavité. Avantageusement, l'étape de récupération du capteur comprend un dispositif d'injection d'air comprimé pour expulser le capteur. L'injection de l'air comprimé dans ledit tube creux s'accompagne de l'expulsion du capteur vers l'extérieur du pneumatique.

Le retrait du bouchon, puis celui du capteur laisse une blessure dans le pneumatique. Avantageusement, la méthode de récupération du capteur comprend une étape de réparation du pneumatique après extraction du bouchon et du capteur de la cavité.

L'étape de réparation consiste par exemple à obturer l'ensemble de la cavité avec un bouchon de caoutchouc d'une manière semblable à celle décrite précédemment pour le bouchon dans la méthode d'instrumentation. Au préalable, chaque est nettoyer de manière à supprimer les résidus de mélange de caoutchouc pouvant s'y trouver.

L'invention concerne également un pneumatique génie civil instrumenté pour la mesure de la température à l'intérieur d'un mélange de caoutchouc dudit pneumatique, selon la méthode d'instrumentation selon l'un des modes de réalisation de l'invention précédemment décrit..

### Description des Figures

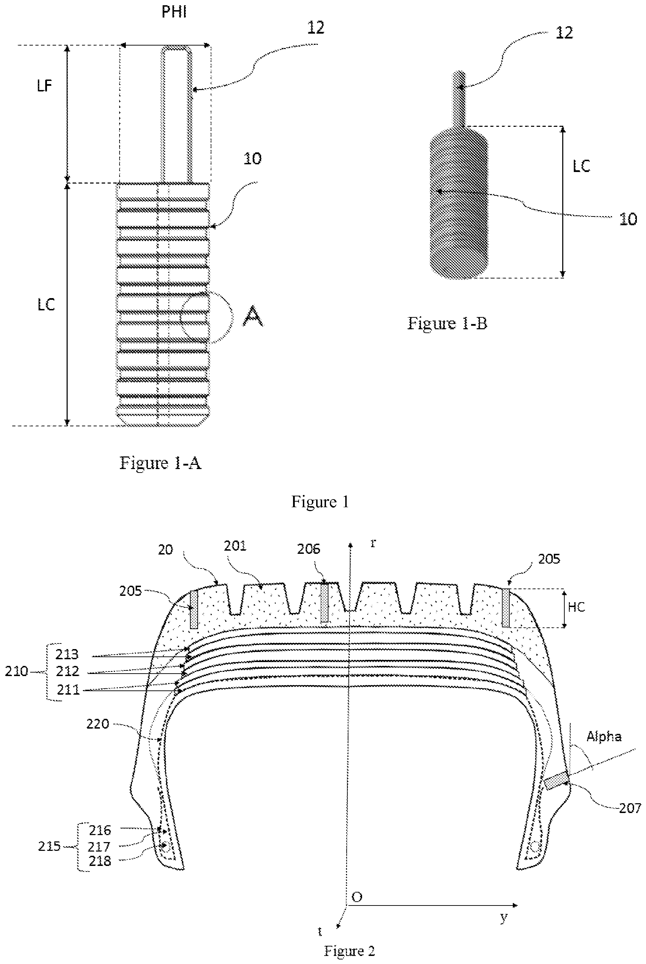

L'invention sera mieux comprise à la lecture de la description qui va suivre, donnée à titre d'exemple non limitatif et faite en se référant aux figures 1-A, 1-B, 2, de 3-A à 3-D, de 4-A à 4-D et 5 dans lesquels :
- Les figures 1-A, et 1-B représentent des vues du capteur du système de mesure de la température proposée par l'invention ;
- La figure 2 est un plan méridien (y,r) du pneumatique, c'est-à-dire un plan générateur du pneumatique en trois dimensions par la rotation de ce plan méridien autour de l'axe (O, y) du repère cylindrique (O, t, y, r) associé au pneumatique ;
- Les figures de 3-A, à 3-D représentent les différentes étapes d'insertion d'un capteur, et d'un bouchon dans une cavité creusée dans un mélange de caoutchouc d'un pneumatique ;
- Les figures 4-A, à 4-D sont relatives aux étapes de retrait d'un capteur et d'un bouchon d'une cavité creusée dans un mélange de caoutchouc d'un pneumatique ;
- La figure 5 représente une courbe de résultats montrant la comparaison des résultats de mesure de la température entre une méthode classique utilisant des thermocouples et la méthode d'instrumentation de l'invention.

### Description détaillée

La figure 1-A montre le capteur 10 qui a une géométrie de forme cylindrique, d'une longueur LC et d'un diamètre PHI, avec un fil d'activation 12 d'une longueur LF. Sur la figure 1-B, on peut voir une vue volumique du capteur 10. Le capteur 10 est destiné à être inséré dans le pneumatique 20 de la figure 2. La référence A de la figure 1-A montre des cannelures qui sont une succession de creux et bosses dans la direction la plus longue du capteur, et lesdites cannelures sont destinées à faciliter l'encrage du capteur dans un mélange de caoutchouc du pneumatique 20.

Le pneumatique 20 est monté sur un véhicule muni d'un dispositif de communication avec ledit capteur.

Les moyens de lecture positionné dans le véhicule stockent les données dans une base de données, accessible par un serveur à distance. Le capteur 10 comprend une carte électronique avec un circuit reliant les composantes telles qu'une sonde de mesure de la température, un microprocesseur, un émetteur radio, et une pile d'alimentation.

Lors de l'activation du capteur avant son insertion dans le mélange de caoutchouc, le fil d'activation 12 est coupé à son extrémité en contact avec le capteur.

Le pneumatique 20 comporte une bande de roulement 201 représentée par le volume comprenant des points noirs radialement le plus extérieur du pneumatique. L'armature de sommet 210 est formée d'une armature de travail 211, d'une armature de protection 212 et d'une armature de frettage 213 radialement superposées extérieurement. Chaque armature comprend deux couches formées de renforts enrobés dans des mélanges de caoutchouc. Finalement, l'armature de sommet comprend dans cet exemple six couches de sommet radialement superposées formées chacune de renforts enrobés dans des mélanges de caoutchouc. Radialement intérieurement à l'armature de sommet 210 prend place l'armature de carcasse 220 qui comprend au moins une couche de carcasse formée d'un brin aller 217 qui contourne une tringle 218 axialement de l'intérieur vers l'extérieur du bourrelet, et se poursuit radialement extérieurement par un brin retour 216. Les renforts de la couche de carcasse font un angle d'environ 90° avec la direction circonférentielle.

Cette architecture optimise l'endurance du pneumatique pour porter la charge requise, mais présente l'inconvénient d'être sensible à la température qui catalyse les phénomènes de fissuration et d'endommagement du pneumatique, notamment à l'extrémité des couches de sommet.

Toujours sur la figure 2, des cavités 205 à l'extrémité des couches de sommet et des cavités 206 au centre de la bande de roulement, orientées de la périphérie extérieure du pneumatique vers l'intérieur des mélanges de caoutchouc sont creusées pour recevoir respectivement un capteur 10 de mesure de la température. L'invention fonctionne également avec des cavités 207 positionnées plus radialement intérieurement, où on peut visualiser l'angle Alpha que fait la direction de perçage avec la direction radiale ainsi que la profondeur HC de la cavité. Pour les cavités 205 et 206, la direction de perçage est parallèle à la direction radiale et donc l'angle Alpha est nul. Dans cet exemple, chaque capteur 10 a une longueur de 45 mm et un diamètre de 17 mm de manière à occuper un volume relativement petit au regard de la dimension du pneumatique. En effet, on doit pouvoir extraire chaque capteur sans endommager le pneumatique.

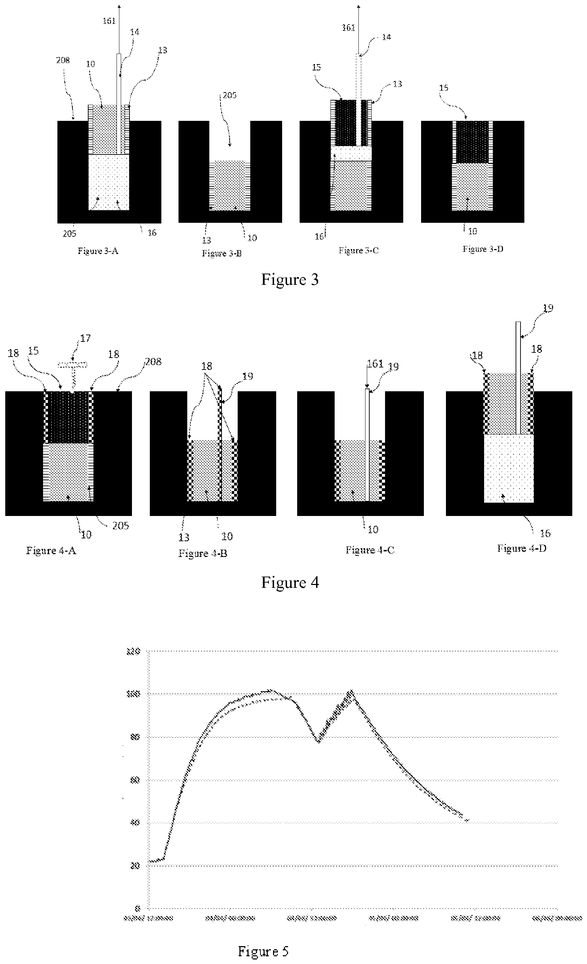

Les figures 3-A à 3-D montrent les différentes étapes d'insertion d'un capteur, et d'un bouchon dans une cavité creusée dans un mélange de caoutchouc d'un pneumatique :
i. Sur la figure 3-A, on voit un bloc de mélange de caoutchouc 208 comprenant une cavité 205 rempli d'air 16. On introduit un capteur 10 dans la cavité 205. Ledit capteur 10 comprend un tube creux 14 traversant toute la longueur du capteur 10. La surface extérieure du capteur 10 destinée à être en contact avec les parois de la cavité est enduite d'une couche de colle 13. A mesure que le capteur 10 s'introduit dans la cavité 205, l'air 16 s'évacue par le tube creux 14 selon la direction de la flèche 161;
ii. Sur la figure 3-B, le capteur est fixé au fond et sur les parois de la cavité 205. La profondeur de la cavité étant supérieure à la longueur du capteur, un volume résiduel reste vide jusqu'à la surface externe du pneumatique. Pour protéger le capteur, des moyens d'obturation doivent être mis en oeuvre ;
iii. Sur la figure 3-C, un bouchon 15 comprenant un tube creux 14, et entouré de colle 13 est inséré dans la cavité à la suite du capteur. Le dispositif d'évacuation de l'air est identique à celui mise en oeuvre pour l'insertion du capteur dans la cavité, l'air circulant au travers du tube creux 14 selon la direction indiquée par la flèche 161 ;
iv. A la figure 3-D, le capteur 10 et le bouchon 15 sont mis en place. Le capteur est hermétiquement clos dans la cavité, protégé par le bouchon qui est constitué du même mélange de caoutchouc que la cavité.

Les figures 4-A à 4-D montrent les différentes étapes de retrait d'un bouchon, et d'un capteur dans une cavité creusée dans un mélange de caoutchouc d'un pneumatique :
i. A la figure 4-A, on voit un bloc de mélange de caoutchouc 208 comprenant une cavité 205. Ladite cavité comprend un capteur 10 collé contre les parois et le fond de la cavité à l'aide d'une couche de colle 13. Le capteur 10 est protégé par un bouchon 15. On voit aussi un solvant de dissolution 18 de part et d'autre de la surface du bouchon en contact avec les parois de la cavité 205. Le solvant détruit la liaison à la surface du bouchon et des parois de la cavité 205. Dès lors, avec un outil 17 de la forme d'un tire-bouchon, le bouchon 15 peut être retiré ;
ii. A la figure 4-B, le bouchon est retiré, mais on continue de verser du solvant entre la surface du capteur et celle de la cavité de manière à les désolidariser. Pour cela, on utilise un tube creux 19 qui traverse toute la longueur du capteur jusqu'au fond de la cavité.
iii. A la figure 4-C, de l'air comprimé indiqué par la flèche 161 est injecté dans le tube 19 aménagé dans le capteur 10 désolidarisé de la cavité 205 par l'action du solvant. L'air comprimé est injecté selon la direction de la flèche 161 ;
iv. A la figure 4-D, le capteur 10 remonte à la surface par l'air comprimé qui l'expulse de la cavité.

L'invention a été mise en oeuvre sur un pneumatique de dimension 59/80 R63 désigné selon le référentiel ETRTO, (Organisation Européenne pour les pneumatiques et les jantes) qui équipe un véhicule de type Tombereau. Le pneumatique testé est gonflé à 650 kPa.

L'essieu avant du Tombereau a été équipé avec ces dimensions pneumatiques ci-dessus mentionnées. La charge à l'essieu avant est de 63 tonnes.

Les capteurs ont été positionnés pour mesurer la température proche des couches de sommet au niveau des épaules dans des cavités 205, et au centre du pneumatique dans des cavités 206. Ces zones ont été identifiées comme étant les plus sensibles à la température par simulation numérique en tenant compte de l'usage des pneumatiques et notamment de la mine exploitée. Le test s'est déroulé sur 10 de jours.

Le capteur comprend une carte électronique munie d'une sonde de mesure de température, un émetteur radio, qui peut être interrogé par un lecteur positionné dans le véhicule. La sonde de température, l'émetteur radio, et le lecteur sont de références classiques accessibles dans le commerce. La période de transmission des données du capteur vers le véhicule est de cinq minutes.

Sur la figure 5, on peut voir la comparaison entre la température mesurée par thermocouples (courbe C2 en traits discontinus) et la température mesurée par des moyens de l'invention (courbe C1 en traits continus). L'axe des abscisses représente le temps de roulage, et l'axe des ordonnées représente les valeurs de température mesurées. Ce résultat a été obtenu en rajoutant sur un pneumatique de l'invention des thermocouples pour faire un test comparatif dans les mêmes conditions de sollicitations sur une machine appropriée. Les résultats de mesure de la température avec thermocouples et selon des moyens de l'invention, sont suffisamment proches pour confirmer la pertinence de l'invention.

L'invention présente l'avantage d'accéder de manière simple au niveau de température dans les mélanges de caoutchouc et en automatique au détriment des approches classiques par exemple, par thermocouples qui peuvent avoir un impact négatif sur la productivité de l'exploitation minière. En effet les véhicules ne sont pas arrêtés et les interventions humaines sont limitées dans la méthode de mesure de la température proposée par l'invention.

Les moyens de mesure, leur méthode d'insertion, les moyens de maintien des capteurs en position fixe, ainsi que les moyens de communication des valeurs de la température mesurées sont confirmés par ces résultats.

Un premier exemple d'application des résultats de l'invention est d'adapter les conditions d'utilisation des pneumatiques en temps réels en fonction du niveau moyen de température. Des dispositifs d'alerte peuvent être mis en place pour prévenir le conducteur quand la température atteint un niveau excessif.

## Revendications

1. Méthode d'instrumentation d'un pneumatique du génie civil (20) pour la mesure de la température à l'intérieur d'un mélange de caoutchouc dudit pneumatique comprenant les étapes suivantes :
a. Repérage sur la surface externe du pneumatique d'au moins une zone selon des critères de sélection prédéfinis, un capteur (10) de mesure de la température étant destiné à être inséré dans ladite au moins une zone ;
b. Perçage d'une cavité (205) dans ladite au moins une zone d'insertion repérée à l'étape précédente, d'une profondeur Hc dans la direction de perçage définie par une droite faisant un angle Alpha avec une direction radiale du pneumatique au point de perçage ;
c. Activation dudit capteur (10) de mesure de la température muni d'un microprocesseur, des moyens de transmission radio, d'une sonde de mesure de la température, et des moyens d'alimentation ;
d. Insertion du capteur (10) dans la cavité percée (205) dans le pneumatique en coopérant avec un dispositif d'évacuation de l'air contenu dans la cavité.
e. Fixation du capteur (10) au fond, et/ou sur les parois de la cavité à l'aide d'un dispositif de fixation ;
f. Fermeture hermétique la cavité (205) par des moyens d'obturation

2. Méthode d'instrumentation d'un pneumatique du génie civil pour la mesure de la température à l'intérieur d'un mélange de caoutchouc dudit pneumatique selon la revendication précédente **caractérisé en ce qu'**un des critères prédéfinis de sélection de la zone de perçage pour l'insertion d'un capteur de mesure de la température consistent à se positionner dans la bande de roulement du pneumatique, destinée à être en contact avec un sol.

3. Méthode d'instrumentation d'un pneumatique du génie civil pour la mesure de la température à l'intérieur d'un mélange de caoutchouc dudit pneumatique selon la revendication 1, le capteur étant de forme cylindrique, **caractérisé en ce que** l'étape de perçage est réalisée à l'aide d'un foret d'un diamètre au plus égal au diamètre du capteur.

4. Méthode d'instrumentation d'un pneumatique du génie civil pour la mesure de la température à l'intérieur d'un mélange de caoutchouc dudit pneumatique selon la revendication 1, **caractérisé en ce que** la fixation du capteur au fonds, et/ou sur les parois de la cavité est réalisée par collage.

5. Méthode d'instrumentation d'un pneumatique du génie civil pour la mesure de la température à l'intérieur d'un mélange de caoutchouc dudit pneumatique selon la revendication 4, **caractérisé en ce que** le collage est réalisé avec une colle de vulcanisation à froid.

6. Méthode d'instrumentation d'un pneumatique du génie civil pour la mesure de la température à l'intérieur d'un mélange de caoutchouc dudit pneumatique selon la revendication 5, **caractérisé en ce que** le temps de prise du collage est au moins égal à 24 heures.

7. Méthode d'instrumentation d'un pneumatique du génie civil pour la mesure de la température à l'intérieur d'un mélange de caoutchouc dudit pneumatique selon l'une des revendications précédentes, **caractérisé en ce que** lesdits moyens d'obturation de la cavité percée dans le pneumatique comprennent un bouchon (15) fixé par collage sur les surfaces internes de la paroi de la cavité.

8. Méthode d'instrumentation d'un pneumatique du génie civil pour la mesure de la température à l'intérieur d'un mélange de caoutchouc dudit pneumatique selon l'une des revendications précédentes, **caractérisé en ce que** l'insertion desdits moyens d'obturation de la cavité percée dans le pneumatique coopèrent avec un dispositif d'évacuation de l'air contenu dans la cavité.

9. Méthode d'instrumentation d'un pneumatique du génie civil pour la mesure de la température à l'intérieur d'un mélange de caoutchouc dudit pneumatique selon l'une des revendications précédentes, **caractérisé en ce que** lesdits moyens d'obturation de la cavité percée dans le pneumatique comprennent un bouchon (15) constitué du même mélange de caoutchouc que celui formant les parois de la cavité.

10. Méthode d'instrumentation d'un pneumatique du génie civil pour la mesure de la température à l'intérieur d'un mélange de caoutchouc dudit pneumatique selon l'une des revendications précédentes **dans laquelle** des premiers capteurs sont positionnés selon une direction circonférentielle avec un premier pas de distribution, et/ou des seconds capteurs sont positionnés dans une direction axiale selon un deuxième pas de distribution.

11. Pneumatique du génie civil instrumenté pour la mesure de la température à l'intérieur d'un mélange de caoutchouc dudit pneumatique, selon la méthode d'instrumentation selon l'une des revendications 1 à 10

## Patentansprüche

1. Verfahren zur Instrumentierung eines Erdbewegungsreifens (20) zur Messung der Temperatur im Inneren einer Kautschukmischung des Reifens, umfassend die folgenden Schritte:
a. Kennzeichnen mindestens eines Bereichs nach vorgegebenen Auswahlkriterien auf der Außenfläche des Reifens, wobei ein Sensor (10) zur Messung der Temperatur dazu bestimmt ist, in den mindestens einen Bereich eingesetzt zu werden;
b. Bohren eines Hohlraums (205) in den mindestens einen im vorhergehenden Schritt gekennzeichneten Einsetzbereich, mit einer Tiefe Hc in der Bohrrichtung, die durch eine Gerade definiert ist, die einen Winkel Alpha mit einer radialen Richtung des Reifens im Bohrpunkt bildet;
c. Aktivieren des Sensors (10) zur Messung der Temperatur, der mit einem Mikroprozessor, Funkübertragungsmitteln, einem Temperaturmessfühler und Stromversorgungsmitteln versehen ist;
d. Einsetzen des Sensors (10) in den in den Reifen gebohrten Hohlraum (205) unter Zusammenwirken mit einer Vorrichtung zum Abführen der in dem Hohlraum enthaltenen Luft;
e. Befestigen des Sensors (10) am Boden und/oder an den Wänden des Hohlraums mithilfe einer Befestigungsvorrichtung;
f. hermetisches Verschließen des Hohlraums (205) mit Verschlussmitteln.

2. Verfahren zur Instrumentierung eines Erdbewegungsreifens zur Messung der Temperatur im Inneren einer Kautschukmischung des Reifens nach dem vorhergehenden Anspruch, **dadurch gekennzeichnet, dass** eines der vorgegebenen Auswahlkriterien des Bohrbereichs zum Einsetzen eines Sensors zur Messung der Temperatur darin besteht, ihn in dem Laufstreifen des Reifens zu positionieren, der dazu bestimmt ist, mit einem Boden in Kontakt zu sein.

3. Verfahren zur Instrumentierung eines Erdbewegungsreifens zur Messung der Temperatur im Inneren einer Kautschukmischung des Reifens nach Anspruch 1, wobei der Sensor zylindrisch ist, **dadurch gekennzeichnet, dass** der Schritt des Bohrens mithilfe eines Bohrers mit einem Durchmesser, der höchstens gleich dem Durchmesser des Sensors ist, ausgeführt wird.

4. Verfahren zur Instrumentierung eines Erdbewegungsreifens zur Messung der Temperatur im Inneren einer Kautschukmischung des Reifens nach Anspruch 1, **dadurch gekennzeichnet, dass** das Befestigen des Sensors am Boden und/oder an den Wänden des Hohlraums durch Kleben ausgeführt wird.

5. Verfahren zur Instrumentierung eines Erdbewegungsreifens zur Messung der Temperatur im Inneren einer Kautschukmischung des Reifens nach Anspruch 4, **dadurch gekennzeichnet, dass** das Kleben mit einem Klebstoff zur Kaltvulkanisation ausgeführt wird.

6. Verfahren zur Instrumentierung eines Erdbewegungsreifens zur Messung der Temperatur im Inneren einer Kautschukmischung des Reifens nach Anspruch 5, **dadurch gekennzeichnet, dass** die Abbindezeit der Klebung mindestens 24 Stunden beträgt.

7. Verfahren zur Instrumentierung eines Erdbewegungsreifens zur Messung der Temperatur im Inneren einer Kautschukmischung des Reifens nach einem der vorhergehenden Ansprüche, **dadurch gekennzeichnet, dass** die Verschlussmittel des in den Reifen gebohrten Hohlraums einen Stopfen (15) umfassen, der durch Kleben an den Innenflächen der Wand des Hohlraums befestigt wird.

8. Verfahren zur Instrumentierung eines Erdbewegungsreifens zur Messung der Temperatur im Inneren einer Kautschukmischung des Reifens nach einem der vorhergehenden Ansprüche, **dadurch gekennzeichnet, dass** das Einsetzen der Verschlussmittel des in den Reifen gebohrten Hohlraums mit einer Vorrichtung zum Abführen der in dem Hohlraum enthaltenen Luft zusammenwirkt.

9. Verfahren zur Instrumentierung eines Erdbewegungsreifens zur Messung der Temperatur im Inneren einer Kautschukmischung des Reifens nach einem der vorhergehenden Ansprüche, **dadurch gekennzeichnet, dass** die Verschlussmittel des in den Reifen gebohrten Hohlraums einen Stopfen (15) umfassen, der aus derselben Kautschukmischung wie derjenigen besteht, die die Wände des Hohlraums bildet.

10. Verfahren zur Instrumentierung eines Erdbewegungsreifens zur Messung der Temperatur im Inneren einer Kautschukmischung des Reifens nach einem der vorhergehenden Ansprüche, wobei erste Sensoren entlang einer Umfangsrichtung mit einem ersten Verteilungsabstand positioniert sind und/oder zweite Sensoren in einer axialen Richtung gemäß einem zweiten Verteilungsabstand positioniert sind.

11. Erdbewegungsreifen, der zur Messung der Temperatur im Inneren einer Kautschukmischung des Reifens nach dem Verfahren zur Instrumentierung nach einem der Ansprüche 1 bis 10 instrumentiert ist.

## Claims

1. Method for instrumenting a construction plant tyre (20) for measuring the temperature inside a rubber compound of said tyre, comprising the following steps:
a. Identifying, on the outer surface of the tyre, at least one area on the basis of predefined selection criteria, a temperature measuring sensor (10) being intended for insertion into said at least one area;
b. Drilling a cavity (205) in said at least one insertion area identified in the preceding step, with a depth Hc in the drilling direction that is defined by a straight line making an angle Alpha with a radial direction of the tyre at the drilling point;
c. Activating said temperature measuring sensor (10), which is equipped with a microprocessor, radio transmission means, a temperature measuring probe, and power supply means;
d. Inserting the sensor (10) in the cavity drilled in the tyre by interacting with a device for evacuating air that is present in the cavity;
e. Fixing the sensor (10) to the bottom and/or on the walls of the cavity using a fixing device;
f. Hermetically closing the cavity (205) by filling means.

2. Method for instrumenting a construction plant tyre for measuring the temperature inside a rubber compound of said tyre according to the preceding claim, **characterized in that** one of the predefined selection criteria for the drilling area for the insertion of a temperature measuring sensor consists in being positioned in the tread of the tyre that is intended to be in contact with the ground.

3. Method for instrumenting a construction plant tyre for measuring the temperature inside a rubber compound of said tyre according to Claim 1, the sensor having a cylindrical shape, **characterized in that** the drilling step is performed using a drill bit with a diameter at most equal to the diameter of the sensor.

4. Method for instrumenting a construction plant tyre for measuring the temperature inside a rubber compound of said tyre according to Claim 1, **characterized in that** the fixation of the sensor to the bottom and/or on the walls of the cavity is performed by adhesive bonding.

5. Method for instrumenting a construction plant tyre for measuring the temperature inside a rubber compound of said tyre according to Claim 4, **characterized in that** the adhesive bonding is performed with a cold-vulcanizing adhesive.

6. Method for instrumenting a construction plant tyre for measuring the temperature inside a rubber compound of said tyre according to Claim 5, **characterized in that** the setting time for the adhesive bonding is at least equal to 24 hours.

7. Method for instrumenting a construction plant tyre for measuring the temperature inside a rubber compound of said tyre according to one of the preceding claims, **characterized in that** said means for filling the cavity drilled in the tyre comprise a stopper (15) fixed by adhesive bonding to the internal surfaces of the wall of the cavity.

8. Method for instrumenting a construction plant tyre for measuring the temperature inside a rubber compound of said tyre according to one of the preceding claims, **characterized in that** the insertion of said means for filling the cavity drilled in the tyre interact with a device for evacuating air that is present in the cavity.

9. Method for instrumenting a construction plant tyre for measuring the temperature inside a rubber compound of said tyre according to one of the preceding claims, **characterized in that** said means for filling the cavity drilled in the tyre comprise a stopper (15) made of the same rubber compound as that forming the walls of the cavity.

10. Method for instrumenting a construction plant tyre for measuring the temperature inside a rubber compound of said tyre according to one of the preceding claims, **wherein** first sensors are positioned along a circumferential direction with a first distribution pitch, and/or second sensors are positioned in an axial direction with a second distribution pitch.

11. Construction plant tyre instrumented for measuring the temperature inside a rubber compound of said tyre according to the method for instrumenting according to one of claims 1 to 10.
